# EUROPÄISCHE PATENTSCHRIFT

(11) **EP 4 352 387 B1**
(45) Veröffentlichungstag und Bekanntmachung des Hinweises auf die Patenterteilung: **18.06.2025**
(21) Anmeldenummer: 22722681.8
(22) Anmeldetag: 19.04.2022
(51) Int. Cl.: F16H 63/34

(54) **BETÄTIGUNGSAKTUATOR FÜR EINE PARKSPERRE**
ACTUATOR FOR A PARKING LOCK
ACTIONNEUR POUR UN VERROU DE STATIONNEMENT

(30) Priorität: 07.06.2021 DE 102021114493
(43) Veröffentlichungstag der Anmeldung: 17.04.2024
(73) Patentinhaber: Schaeffler Technologies AG & Co. KG, 91074 Herzogenaurach (DE)
(72) Erfinder: BUNOUT, Felix, 76137 Karlsruhe (DE)
(86) Internationale Anmeldenummer: PCT/DE2022/100294
(87) Internationale Veröffentlichungsnummer: WO 2022/258096

(56) Entgegenhaltungen:
- EP-A1- 2 458 226
- DE-A1- 102010 043 262
- DE-A1- 102013 213 678

## Beschreibung

Die Erfindung betrifft einen Betätigungsaktuator für eine Parksperre, aufweisend zumindest die folgenden Komponenten:
- ein Axialtriebmittel zum Übertragen einer Axialkraft;
- ein Betätigungselement mit einer Betätigungsachse, welches mittels der Axialkraft des Axialtriebmittels von einer ersten Position in eine zweite Position axial bewegbar ist;
- ein Stopperelement;
- eine zu dem Stopperelement korrespondierende Stopperkomponente; sowie
- ein Halteelement, welches zwischen einer gelösten Stellung und einer sperrenden Stellung bewegbar ist, wobei während sich das Betätigungselement in der ausgelenkten Position befindet mit dem Halteelement in der sperrenden Stellung das Stopperelement und die Stopperkomponente zueinander fixiert sind. Der Betätigungsaktuator zeichnet sich dadurch aus, dass weiterhin ein Hubmagnet mit einer Spule und einem mittels einer von der Spule erzeugbaren Magnetkraft axial bewegbaren Hubkolben vorgesehen ist,
wobei das Halteelement mit dem axial bewegbaren Hubkolben fest verbunden ist. Die Erfindung betrifft weiterhin eine Parksperre für eine Parksperrenvorrichtung eines Getriebes, eine Parksperrenvorrichtung mit einer solchen Parksperre, ein Getriebe mit einer solchen Parksperrenvorrichtung für einen Antriebsstrang, einen Antriebsstrang mit einem solchen Getriebe, sowie ein Kraftfahrzeug mit einem solchen Antriebsstrang.

Parksperren sind beispielsweise aus der DE 10 2018 115 548 A1 bekannt. Kraftfahrzeuge mit Parksperre, beispielsweise mit sogenannter by-wire-Parksperre, in normal-gesperrter Konfiguration, also mit blockiertem Fahrwerk bei Systemausfall, müssen während der Fahrt unter ständiger Energieaufnahme aktiv offengehalten werden. Im Zuge der Elektrifizierung von Kraftfahrzeugen ist der Energiebedarf aller Komponenten für die erzielbare Reichweite relevant und daher muss ein energieeffizienter Betrieb der Parksperre im Fahrtzustand des Kraftfahrzeugs angestrebt werden.

Aus der DE 10 2013 213 678 A1 ist eine Betätigungsvorrichtung für eine Parksperreneinheit bekannt, bei welcher zum Sperren der Parksperreneinheit im offenen Betriebszustand ein geringer Haltestrom für einen Elektromagneten notwendig ist. Außerdem kann ein ungewolltes Öffnen der Parksperreneinheit durch ein Nichtschalten des Elektromagneten verhindert werden.

Eine gattungsgemäße Vorrichtung ist ferner aus der EP 2 458 226 A1 bekannt. Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus dem unabhängigen Anspruch 1, zu denen vorteilhafte Ausgestaltungen in den abhängigen Ansprüchen aufgezeigt werden.

Es wird im Folgenden auf die genannte Betätigungsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der hier vorgeschlagene Betätigungsaktuator umfasst ein Axialtriebmittel, beispielsweise einen elektrischen Aktuator mit einem Spindeltrieb oder einen Nehmerkolben eines fluidischen, also pneumatischen oder hydraulischen, Betätigungssystems. Mittels des Axialtriebmittels ist entlang einer Betätigungsachse eine Axialkraft ausübbar und auf das Betätigungselement übertragbar. Das Betätigungselement ist beispielsweise ein Stößel beziehungsweise Stab, eine axial bewegbare Spindel oder eine axial bewegbare Spindelmutter. Das Betätigungselement ist zum Übertragen der Axialkraft des Axialtriebmittels auf einen Sperrmechanismus eingerichtet. Das Betätigungselement ist entlang einer Betätigungsachse bewegbar geführt, welches mittels des Axialtriebmittels von einer (normalen) ersten Position in eine (ausgelenkte) zweite Position axial bewegbar ist. In einer bevorzugten Ausführungsform ist das Betätigungselement ausschließlich passiv von einer zu der Axialkraft des Axialtriebmittels antagonistischen (Speicher-) Kraft in die normale Position zurückführbar. Alternativ ist das Betätigungselement zusätzlich oder alternativ von dem Axialtriebmittel von der ausgelenkten Position in die normale Position zurückführbar. Die mittels des Betätigungselements übertragbare Axialkraft des Axialtriebmittels ist zum Überwinden einer antagonistischen Kraft eines ersten Energiespeicherelements und/oder eines Sperrmechanismus eingerichtet, wobei bevorzugt damit ein (normal-sperrender) Sperrmechanismus aus dem sperrenden Zustand in den freien Zustand überführbar ist. Alternativ ist umgekehrt ein (normal-offener) Sperrmechanismus aus dem freien Zustand in den sperrenden Zustand überführbar. Ein solches (erstes) Energiespeicherelement ist beispielsweise als eine Schraubendruckfeder, Tellerfeder, Magnetfeder oder Gasdruckfeder ausgeführt. Bevorzugt ist das erste Energiespeicherelement als Schraubendruckfeder mit zu der Betätigungsachse paralleler oder koaxialer Federachse ausgeführt.

Um nun den jeweiligen Zustand des Sperrmechanismus energiearm halten zu können, ist hier ein Stopperelement vorgeschlagen, welches mit einer korrespondierenden Stopperkomponente derart zusammenwirkend eingerichtet ist, dass eine reibschlüssige und/oder formschlüssige Verbindung gebildet ist. In einer Ausführungsform ist das Stopperelement mit dem Axialtriebmittel beziehungsweise mit dem Betätigungselement fixiert sowie die Stopperkomponente zumindest während der ausgelenkten Position des Betätigungselements axial zu einem Gegenlager des Axialtriebmittels fixiert. Alternativ ist dies andersherum ausgeführt. In einer Ausführungsform ist das Stopperelement von zumindest einer Lasche mit einer Kontaktstelle gebildet, wobei die Kontaktstelle zum Aufbringen der Haltekraft mit der korrespondierenden Stopperkomponente in Kontakt bringbar ist. In einer Ausführungsform ist zusätzlich eine (bevorzugt schaltbare) magnetische (Stopper-) Kraft erzeugt, mit welcher die aus dem Formschluss und/oder Reibschluss resultierende Stopperkraft unterstützt ist. In einer Ausführungsform ist mit der Stopperkraft eine die Axialkraft ergänzende Kraft vorgehalten, und mittels der beziehungsweise während des Vohaltens der Stopperkraft die (erforderliche) Axialkraft zum Überwinden der oben genannten antagonistischen Kraft reduzierbar und folglich die Energieaufnahme des Betätigungsaktuators reduziert. In einer anderen Ausführungsform ist die Stopperkraft (ohne die Mitwirkung des Halteelements) bis zu vernachlässigbar gering, wobei bevorzugt keine magnetische Kraft zwischen dem Stopperelement und der korrespondierenden Stopperkomponente vorgehalten ist.

Die (in der ausgelenkten Position fixierte) korrespondierende Stopperkomponente (beziehungsweise Stopperelement) ist in einer bevorzugten Ausführungsform axial fixiert und damit relativ zu dem Gegenlager des Axialtriebmittels (beispielsweise dem Fluidikzylinder eines Nehmerkolbens) fest. In einer alternativen Ausführungsform ist die korrespondierende Stopperkomponente mit dem Axialtriebmittel beziehungsweise mit dem Betätigungselement mitbewegbar und in der zweiten Position mittels eines Anschlags fixiert.

Die Stopperkraft muss für eine Sicherstellung der Einnahme des normalen Zustands der Parksperre (sei sie normal-sperrend oder normal-offen) geringer sein als die antagonistische Kraft zu der Axialkraft des Axialtriebmittels, wobei die antagonistische Kraft zum Überführen des Betätigungselements von der ausgelenkten Position in die normale Position übertragbar ist. Bei einer normal-sperrenden Konfiguration der Parksperre wird also aktiv von der Axialkraft die Parksperre von dem (normalen) sperrenden Zustand in den (abweichenden) freien Zustand überführt, wobei also die normale Position des Betätigungselements dem sperrenden Zustand (Park-Position) und die ausgelenkte Position dem freien Zustand (Fahrt-Position) entspricht. In der normalen Position muss oder wird keine Axialkraft ausgeübt, sodass von dem Axialtriebmittel keine externe Energieaufnahme notwendig ist. Die normale Position des Betätigungselements ist bevorzugt mittels der Speicherkraft eines ersten Energiespeicherelements gesichert. Zum Überführen des Betätigungselements in die ausgelenkte Position ist eine Axialkraft notwendig, wobei hierfür also eine externe Energieaufnahme notwendig ist.

Damit die Stopperkraft ausreichend ist, um das Betätigungselement in der ausgelenkten Position (beispielsweise Fahrt-Position bei einer Parksperre in normal-sperrender Konfiguration) zu halten, ist hier vorgeschlagen, dass weiterhin ein Halteelement vorgesehen ist. Das Halteelement ist zwischen einer sperrenden Stellung und einer gelösten Stellung bewegbar. Mittels des Halteelements ist in der sperrenden Stellung der Zustand der korrespondierenden Stopperkomponente und des Stopperelements in dem Zustand fixiert, welcher der ausgelenkten Position des Betätigungselements entspricht. Dann ist also von dem Halteelement eine solche Kraft übertragen, dass die daraus resultierende Stopperkraft ausreichend ist, um die zu der Axialkraft des Axialtriebmittels antagonistische Kraft zu überwinden. Bei einem reinen Reibschluss zwischen dem Stopperelement und der korrespondierenden Stopperkomponente ist bevorzugt von dem Halteelement eine zusätzliche Haltekraft zum Steigern der Reibhaftung aufgebracht, besonders bevorzugt mittels einer Kulisse, beispielsweise einer Rampenform an dem Halteelement und/oder an dem Stopperelement. Zumindest ist von dem Halteelement ein Formschluss derart mit dem Stopperelement gebildet, dass das Stopperelement an einer Ausweichbewegung gehindert ist. Die Möglichkeit einer Ausweichbewegung (ohne Einwirken des Halteelements) ist gewollt, sodass sich die Verbindung zwischen dem Stopperelement und der korrespondierenden Stopperkomponente selbsttätig löst, sobald das Halteelement sich in der gelösten Stellung befindet und die Axialkraft des Axialtriebmittels ausreichend gering, bevorzugt minimal (beispielsweise null oder negativ), ist.

In einer Ausführungsform ist die (korrespondierende) Stopperkomponente mittels eines Hinterschnitts (bezogen auf die Betätigungsachse), beispielsweise mittels einer Nut, gebildet. In einer Ausführungsform ist die Kontaktstelle des Stopperelements eine Erhebung, bevorzugt an einer Spitze des als Lasche ausgeführten Stopperelements, welche zum Bilden eines Formschlusses axial hinter den Hinterschnitt, beispielsweise eine Nut, versenkbar ist. In einer Ausführungsform ist das Stopperelement von zumindest einer Federlasche mit axialer Haupterstreckung und radialer Federrichtung gebildet. In einer bevorzugten Ausführungsform ist für eine Vermeidung von Kippkräften quer zu der Betätigungsachse eine zu der Betätigungsachse symmetrische Anordnung von Teilelementen des Stopperelements und der Stopperkomponente, sowie bevorzugt des Halteelements, gebildet, besonders bevorzugt eine Ring-artige Anordnung. Beispielsweise umfasst das Stopperelement eine Mehrzahl von (bevorzugt Feder-) Laschen und die korrespondierende Stopperkomponente eine komplementäre Aufnahme, beispielsweise eine umlaufende Gegenfläche beziehungsweise Hinterschnitt (beispielsweise Nut). Das Halteelement ist dann bevorzugt ebenfalls komplementär zu der Mehrzahl der Laschen oder Ring-förmig gebildet.

Die zumindest eine Federlasche ist beispielsweise aus einem metallischen Werkstoff, beispielsweise einem Federblech, hergestellt. In einer anderen Ausführungsform ist die Federlasche aus einem Kunststoff hergestellt. In einer bevorzugten Ausführungsform ist die zumindest eine Federlasche von dem Stopperelement einstückig umfasst.

Gemäß der vorliegenden Erfindung ist ein Hubmagnet mit einer Spule und einem mittels einer von der Spule erzeugbaren Magnetkraft axial bewegbaren Hubkolben vorgesehen, wobei das Halteelement mit dem axial bewegbaren Hubkolben fest verbunden ist. Somit ist mit einer Bestromung der Spule ein solches Magnetfeld mit einer auf das Halteelement resultierenden Magnetkraft (abschaltbar) induzierbar, sodass bei Anliegen der Magnetkraft das Halteelement aus der sperrenden Stellung in die gelöste Stellung überführt wird. Damit ist eine elektronische Schaltbarkeit des Fixierens des Betätigungselements in der zweiten Position geschaffen. In einer Ausführungsform sind das Halteelement und der Hubkolben einstückig miteinander gebildet.

In einer Ausführungsform wird vorgeschlagen, dass die beiden Flächen von Hubkolben und innerem Rückschluss so zueinander ausgerichtet sind, dass bei bestromter Spule der Hubkolben in Richtung innerer Rückschluss bewegt wird, so dass der Axialspalt verringert wird.

Der Hubmagnet ist derart ausgeführt, dass die Spule mittels eines magnetisch nichtleitenden Materials (beispielsweise Kunststoff) isolierend und positioniert aufgenommen ist, bevorzugt von dem inneren Rückschluss. Die Rückschlüsse sind bevorzugt aus einem ferromagnetischen Material gebildet. Der innere Rückschluss ist radial näher an der Betätigungsachse angeordnet als der äußere Rückschluss. Die Spule ist in einer bevorzugten Ausführungsform um die Betätigungsachse radialumlaufend angeordnet und vollständig von dem Hubmagneten und dem Hubkolben umschlossen. Dann ist bevorzugt das Halteelement ebenfalls umlaufend, beispielsweise Ring-förmig, ausgeführt und koaxial zu der Spule und den Rückschlüssen geführt. Bevorzugt ist die in der zweiten Position des Betätigungselements fixierte Stopperkomponente (beziehungsweise Stopperelement) über den äußeren Rückschluss mit dem Gegenlager des Axialtriebmittels fixiert.

Beide Rückschlüsse bilden zusammen eine U-förmige Öffnung, in welcher der Hubkolben angeordnet ist. Der Hubkolben ist zwischen dem inneren Rückschluss und dem äußeren Rückschluss derart angeordnet, dass eine axiale Bewegung innerhalb der axialen Erstreckung einer der Rückschlüsse ausführbar ist, nämlich zwischen der sperrenden Stellung und der gelösten Stellung. Der Hubkolben ist mittels eines der Rückschlüsse (bevorzugt mittels des äußeren Rückschlusses) in seiner axialen Bewegung geführt und gegen ein Verkeilen und/oder Verlieren gesichert.

Mittels der axialen Bewegung des Hubkolbens liegt in einer der Stellungen daher ein Axialspalt zwischen dem Hubkolben und einem der Rückschlüsse (bevorzugt dem inneren Rückschluss) vor. In einer bevorzugten Ausführungsform liegt der Axialspalt zumindest bei der sperrenden Stellung vor.

In einer Ausführungsform ist der Axialspalt in der (maximalen) anderen (dann beispielsweise gelösten) Stellung geschlossen. Der Hubmagnet ist dann beispielsweise derart eingerichtet, dass der Hubkolben mit dem inneren Rückschluss in Kontakt bringbar ist, also die Magnetkraft derart groß eingerichtet ist, dass der Axialspalt gegen null geht. Es sei darauf hingewiesen, dass in einer alternativen Ausführungsform ein Axialspalt zwischen dem Hubkolben und dem äußeren Rückschluss vorliegt und die beiden Bauteile in Kontakt bringbar sind. Weiterhin sei darauf hingewiesen, dass in einer Ausführungsform dauerhaft eine Axialspalt vorliegt.

Der Axialspalt ist ein solcher Spalt zwischen dem Hubkolben und dem entsprechenden Rückschluss, welcher einen axialen Vektoranteil umfasst, sodass eine axiale Hubbewegung des Hubkolbens (und damit des Halteelements) möglich ist.

Es wird weiterhin in einer vorteilhaften Ausführungsform des Betätigungsaktuators vorgeschlagen, dass die Spalt-Normale des Axialspalts zur Betätigungsachse geneigt oder rein axial ausgerichtet ist.

Der Axialspalt zwischen den Rückschlüssen und dem Hubkolben liegt derart vor, dass der Spalt je nach Ausführungsform des Hubkolbens und des komplementären Rückschlusses ein rein axial ausgerichteter Axialspalt ist, also parallel zu der Betätigungsachse. In einer Ausführungsform weist der Axialspalt einen radialen Vektoranteil auf, wobei also eine Spalt-Normale des Axialspalts unter einem Winkel zur Betätigungsachse orientiert ist, d.h. die beiden Flächen, die den Axialspalt bilden, sind in Bezug zur Betätigungsachse konisch geführt. In einer Ausführungsform umfasst der Axialspalt eine Mehrzahl von Abschnitten mit zueinander verschieden ausgerichteten Spalt-Normalen, beispielsweise ist in einem Abschnitt die Spalt-Normale rein radial ausgerichtet.

In einer bevorzugten Ausführungsform, bei welcher ein umlaufender Axialspalt gebildet ist (beispielsweise einem Ring-förmigen Halteelement und/oder komplementären Rückschluss) nimmt eine (bevorzugt rotationssymmetrische) konische Form ein. Die Geometrie der jeweiligen Enden der komplementären Bauteile (Halteelement und Rückschluss) haben einen direkten Einfluss auf die Magnetkraft. Je nach Orientierung der Magnetfeldlinien innerhalb der Rückschlüsse und dem Eintauchen der Bauteilgeometrie des Hubkolbens in den Hubmagneten, ergibt sich eine andere Magnetkraft beziehungsweise ein anderer axialer Vektoranteil der Magnetkraft. Wenn der axiale Hub des Hubkolbens relativ klein ist, beispielsweise kleiner gleich 0,5 mm [fünf zehntel Millimeter], ist eine rein axiale Ausrichtung der Spalt-Normale für eine große Magnetkraft beziehungsweise eine geringe Energieaufnahme und/oder Baugröße der Spule vorteilhaft. Umgekehrt ist für einen relativ großen axialen Hub des Hubkolbens, beispielsweise größer 0,6 mm [sechs zehntel Millimeter], eine geneigte, besonders bevorzugt konische, Ausrichtung der Spalt-Normale für über den gesamten axialen Hub (und vor allem beim Maximum der Spaltausdehnung des Axialspalts) des Hubkolbens eine große Magnetkraft beziehungsweise eine geringe Energieaufnahme und/oder Baugröße der Spule vorteilhaft.

Es wird weiterhin in einer vorteilhaften Ausführungsform des Betätigungsaktuators vorgeschlagen, dass weiterhin von dem Hubmagnet ein zweites Energiespeicherelement umfasst ist, von welchem eine zu der Magnetkraft antagonistische Vorhaltekraft auf den Hubkolben vorgehalten ist,
wobei bevorzugt die Magnetkraft eine Zugkraft ist.

Hier ist vorgeschlagen, dass der Hubmagnet ein zweites Energiespeicherelement umfasst. Dabei ist dieses zweite Energiespeicherelement derart ausgeführt, dass es entgegen der Magnetkraft des Hubmagnets eine Vorhaltekraft auf den Hubkolben aufbringt. Somit ist mittels des zweiten Energiespeicherelements der Hubkolben (also das Halteelement) passiv in der sperrenden Stellung gehalten und einzig aktiv mittels eines Bestromens der Spule des Hubmagnets in die gelöste Stellung überführbar. Für eine Parksperre in normal-sperrender Konfiguration ist der Betätigungsaktuator derart ausgelegt, dass bei einer Zufuhr von elektrischer Energie in die Spule das Halteelement aus seiner sperrenden Stellung in seine gelöste Stellung übergeht und damit die Parksperre von einem (passiv gesicherten) freien Zustand in den (normalen, also passiven) sperrenden Zustand überführt wird. Für eine Parksperre in normal-offener Konfiguration gilt dies umgekehrt.

In dieser Ausführungsform ist die, die Magnetkraft induzierende, Spule derart ausgeführt, dass die Magnetkraft (bezüglich des Hubkolbens) eine Zugkraft ist. Aufgrund der Zugkraft ist die aktive (aus der Bestromung der Spule resultierende) axiale Bewegung des Hubkolbens in Richtung der Spule gerichtet. Das zweite Energiespeicherelement ist derart dimensioniert, dass die minimale (aktive) Magnetkraft größer ist als die (entsprechend minimale oder maximale) Vorhaltekraft ist. Allein wenn die Magnetkraft ausgeschaltet (also null ist oder ausreichend gering ist), kann das Halteelement in die gelöste Stellung zurückkehren. Wenn sich das Stopperelement und die Stopperkomponente in einem der ausgelenkten Position des Betätigungselements entsprechenden Zustand befinden, wird dann das Betätigungselement ohne externe Energieaufnahme (also passiv) in der zweiten Position gehalten. Sobald das Halteelement von der Magnetkraft in die gelöste Stellung überführt ist, lösen sich das Stopperelement und die Stopperkomponente voneinander, sofern nicht eine ausreichende (aktive) Axialkraft von dem Axialtriebmittel aufgebracht ist. Im Falle einer Verrastung (Nut und Lasche) ist die Fixierung des Stopperelements aus der Stopperkomponente aufgehoben und das Stopperelement gleitet aufgrund der zu der Axialkraft antagonistischen Speicherkraft (eines ersten Energiespeicherelements) aus der Stopperkomponente heraus.

Das zweite Energiespeicherelement ist beispielsweise als eine Schraubendruckfeder, Tellerfeder, Magnetfeder oder Gasdruckfeder ausgeführt. Bevorzugt ist das zweite Energiespeicherelement als Schraubendruckfeder mit zu der Betätigungsachse paralleler oder koaxialer Federachse ausgeführt. Beispielsweise ist der Durchmesser des zweiten Energiespeicherelements durch den Durchmesser des Betätigungsaktuators und/oder von der Wandstärke des Halteelements begrenzt, sodass das Energiespeicherelement bevorzugt radial umlaufend auf das Halteelement wirkt. In einer anderen Ausführungsform umfasst das zweite Energiespeicherelement eine Mehrzahl separater Federn (bevorzugt Schraubendruckfedern), welche umlaufend angeordnet sind und jeweils punktuell auf das Halteelement wirken.

Es wird weiter eine Ausführungsform vorgeschlagen, gemäß derer die Spule vom inneren Rückschluss aufgenommen ist, der innere Rückschluss koaxial zur Betätigungsachse angeordnet ist und das Betätigungselement und/oder ein vom Axialtriebmittel umfasster Nehmerkolben wenigstens teilweise axial überlappt. D.h. der innere Rückschlüss und das Betätigungselement, bzw. der Nehmerkolben sind zumindest teilweise verschachtelt.

Gemäß einer Weiterbilder der Erfindung ist vorgesehen, dass der äußere Rückschluss über eine Presspassung fest mit dem inneren Rückschluss verbunden ist. Hierdurch ist ein besonders einfacher Zusammenbau und Aufbau des Betätigungsaktuators möglich.

Gemäß einem weiteren Aspekt der vorliegenden Erfindung wird eine Parksperre für eine Parksperrenvorrichtung eines Getriebes vorgeschlagen, aufweisend zumindest die folgenden Komponenten:
- einen Sperrmechanismus zum Sperren eines Sperrenrads in einem Drehmomentfluss, wobei im Einsatz von dem Sperrmechanismus in einem sperrenden Zustand das Sperrenrad blockiert und in einem freien Zustand das Sperrenrad freigegeben ist; und
- einen Betätigungsaktuator nach einem der Ansprüche 1-7, wobei in der ausgelenkten Position des Betätigungselements der Sperrmechanismus aus dem sperrenden Zustand herausgeführt ist, und wobei die normale Position des Betätigungselements dem sperrenden Zustand des Sperrmechanismus entspricht.

Die hier vorgeschlagene Parksperre ist derart eingerichtet, dass der Sperrmechanismus das Sperrenrad in einem sperrenden Zustand blockiert und nur in einem freien Zustand das Sperrenrad von dem Sperrmechanismus freigegeben ist. In dem freien Zustand ist das Sperrenrad frei rotierbar, beispielsweise eingesetzt in einem Getriebe eines Kraftfahrzeugs, das Kraftfahrzeug ist dann rollbar. Es sei darauf hingewiesen, dass das Sperrenrad in einem Drehmomentfluss eines Getriebes integriert ist. Ist das Betätigungselement in den sperrenden Zustand hereingeführt, erfolgt mittels des Sperrmechanismus eine Sperrung des Drehmomentflusses und das Getriebe ist blockiert. In dem sperrenden Zustand des Sperrenrads ist in einem solchen Einsatz in einem Getriebe das Kraftfahrzeug also nicht rollbar. Die Parksperre umfasst einen Betätigungsaktuator mit einem Betätigungselement, welches mit dem Sperrmechanismus verbunden ist. Dabei ist das Betätigungselement derart mit dem Sperrmechanismus verbunden, dass mit dem Betätigungselement in der ausgelenkten Position der von dem normalen Zustand abweichenden Zustand im Sperrmechanismus vorliegt. Bei einer Parksperre in normal-sperrender Konfiguration ist also mittels des Betätigungsaktuator aktiv der freie Zustand herbeiführbar. Der von dem normalen Zustand abweichende Zustand muss jedoch nicht aktiv (also unter externer Energieaufnahme) gehalten werden, sondern wird passiv von dem Stopperelement und der Stopperkomponente mit Unterstützung des Halteelements gehalten. Wenn die Spule des Hubmagnets bestromt wird, wird das Stopperelement von der Stopperkomponente getrennt und somit (bevorzugt passiv) das Betätigungselement von der ausgelenkten Position in die normale Position überführt. Der Sperrmechanismus ist somit frei von dem abweichenden Zustand in den normalen Zustand zurückzukehren.

Es wird weiterhin in einer vorteilhaften Ausführungsform der Parksperre vorgeschlagen, dass weiterhin ein Entriegelungselement vorgesehen ist, welches zwischen einer normalen Position und einer entriegelnden Position bewegbar ist, wobei in der entriegelnden Position der freie Zustand des Sperrmechanismus gehalten ist und in der normalen Position die normal-sperrende Funktion der Parksperre sichergestellt ist.

Die Parksperre ist beispielsweise elektrisch und/oder fluidisch, beispielsweise pneumatisch oder hydraulisch, aktuiert und bei einem Ausfall der Elektronik beziehungsweise einem Abfall eines fluidischen Drucks beziehungsweise fluidischen Volumens, wird der Sperrmechanismus in den normalen (bevorzugt sperrenden) Zustand überführt. Bei einer Parksperre in normal-sperrender Konfiguration ist dann das Sperrenrad blockiert. Um dies während eines Passivzustands (beispielsweise bei einem Kraftfahrzeug während der Fertigung, des Transports oder in einer Werkstatt) abzuschalten, ist hier vorgeschlagen, dass ein Entriegelungselement vorgesehen ist, welches zwischen zwei Positionen (beispielsweise als Schwenkhebel ausgeführt um eine Schwenkachse gelagert) bewegbar ist. Dabei ist das Entriegelungselement derart eingerichtet, dass mit dem Entriegelungselement in der entriegelnden Position ohne externe Energieaufnahme der abweichende (beispielsweise freie) Zustand des Sperrmechanismus haltbar ist. In diesem Passivzustand ist damit sichergestellt, dass, wenn die (normal-sperrende) Parksperre in einem Getriebe eines Kraftfahrzeugs eingesetzt ist, das Kraftfahrzeug weiterhin rollbar bleibt. Um diesen Passivzustand aufzuheben, welcher im Betrieb der Parksperre eben unerwünscht ist, ist das Entriegelungselement wieder (bevorzugt wiederholt) deaktivierbar, also in die normale Position überführbar.

In einer bevorzugten Ausführungsform ist zusätzlich ein Feststellelement vorgesehen. Das Feststellelement ist dazu eingerichtet, das Entriegelungselement in der entriegelnden Position zu halten. Wenn das Feststellelement das Entriegelungselement nicht in der entriegelnden Position hält, ist der freie Zustand des Sperrmechanismus von dem Entriegelungselement nicht (passiv) haltbar. Das heißt, dass die entriegelnde Position der abweichende (und damit bei einer Parksperre in normal-sperrender Konfiguration der freie) Zustand des Sperrmechanismus einzig im Zusammenwirken von dem Entriegelungselement und dem Feststellelement (dauerhaft) einstellbar ist.

Gemäß einem weiteren Aspekt der vorliegenden Erfindung wird eine Parksperrenvorrichtung vorgeschlagen. aufweisend ein Sperrenrad zum Anordnen in einem sperrbaren Drehmomentfluss und eine Parksperre nach Anspruch 8 oder Anspruch 9, wobei das Sperrenrad mittels des Sperrmechanismus blockierbar ist.

Die hier vorgeschlagene Parksperrenvorrichtung umfasst eine Parksperre und ein korrespondierendes Sperrenrad. Das Sperrenrad ist in einen sperrbaren Drehmomentfluss eines Antriebsstrang eines Kraftfahrzeugs, bevorzugt in ein Getriebe, integriert und gemäß vorhergehender Beschreibung blockierbar.

In einer Ausführungsform bilden die Parksperre und das Sperrenrad eine Baueinheit. Eine solche Baueinheit ist für den Einbau als zusammenhängendes Bauteil auslieferbar und ohne die Notwendigkeit, diese Baueinheit wieder auseinanderzunehmen, am vorgesehenen Montageort, beispielsweise in einem Kraftfahrzeug, montierbar. In einer Ausführungsform ist der Sperrmechanismus, und in einer Ausführungsform auch das Sperrenrad, eine Baueinheit, während der Betätigungsaktuator separat gebildet ist, wobei in einer Ausführungsform der Betätigungsaktuator eine separate weitere Baueinheit bildet. Das Sperrenrad ist im Einbau in einem Antriebsstrang beispielsweise eines Kraftfahrzeugs derart angeordnet, dass zumindest einer der Verbraucher an einer Drehmomentweitergabe beziehungsweise Drehmomentaufnahme gehindert ist, wenn sich der Sperrmechanismus in dem sperrenden Zustand befindet, also das Sperrenrad blockiert ist.

Gemäß einem weiteren Aspekt der vorliegenden Erfindung ird ein Getriebe für einen Antriebsstrang vorgeschlagen, aufweisend zumindest die folgenden Komponenten:
- eine Parksperrenvorrichtung nach Anspruch 10;
- ein Drehmomentübertragungsgetriebe, welches das Sperrenrad umfasst; und
- ein Getriebegehäuse, welches einen Getrieberaum umgibt,
wobei der Sperrmechanismus der Parksperre, bevorzugt vollständig, besonders bevorzugt die gesamte Parksperrenvorrichtung, in dem Getrieberaum angeordnet ist.

Das Getriebe, beispielsweise ein Automatikgetriebe für einen Antriebsstrang eines Kraftfahrzeugs, umfasst das Sperrenrad. Beispielsweise bildet das Sperrenrad ein Stirnrad eines als schaltbares Übersetzungsgetriebe ausgeführten Drehmomentübertragungsgetriebes. Das Getriebe weist einen Drehmomenteingang, beispielsweise eine oder mehrere Getriebeeingangswellen, und einen Drehmomentausgang, beispielsweise eine oder mehrere Getriebeausgangswellen, auf. Im Getriebe wird das Drehmoment umgelenkt, untersetzt, übersetzt und/oder abnahmegerecht verteilt (als Differential).

In einer Ausführungsform umfasst das Getriebe eine Kupplung, beispielsweise eine Reibkupplung oder eine Klauenkupplung, im Drehmomentfluss. Der Drehmomenteingang ist antriebsmaschinenseitig und der Drehmomentausgang ist verbraucherseitig angeordnet. Die Drehmomentrichtung ist jedoch auch umgekehrt von einem (bei einer Rekuperation) Verbraucher hin zu einer Antriebsmaschine beziehungsweise einem Generator möglich. Es wird weiterhin in einer vorteilhaften Ausführungsform des Getriebes vorgeschlagen, dass die Parksperre insgesamt oder einzig der Sperrmechanismus in einen von einem Getriebegehäuse gebildeten Getrieberaum des Getriebes integriert ist.

Gemäß einem weiteren Aspekt der vorliegenden Erfindung wird ein Antriebsstrang vorgeschlagen, aufweisend zumindest die folgenden Komponenten:
- zumindest eine Antriebsmaschine zum Abgeben eines Drehmoments;
- zumindest einen Verbraucher zum Aufnehmen eines Drehmoments; und
- ein Getriebe nach Anspruch 11,

wobei die zumindest eine Antriebsmaschine und der zumindest eine Verbraucher mittels des Getriebes drehmomentübertragend miteinander verbunden sind,
wobei ein Drehmomentübertragen zwischen der Antriebsmaschine und dem zumindest einen Verbraucher mittels der Parksperrenvorrichtung in dem sperrenden Zustand des Sperrmechanismus unterbunden ist.

Der hier vorgeschlagene Antriebsstrang umfasst zumindest eine Antriebsmaschine, beispielsweise eine Verbrennungskraftmaschine und/oder eine elektrische Antriebsmaschine, welche zumindest in einem Hauptzustand die Drehmomentquelle eines Drehmomentflusses bildet. Weiterhin ist zumindest ein Verbraucher umfasst, beispielsweise Vortriebsräder eines Kraftfahrzeugs, welcher zumindest in einem Hauptzustand die Drehmomentsenke des Drehmomentflusses bildet. Zwischengeschaltet ist ein Getriebe nach einer Ausführungsform gemäß der vorhergehenden Beschreibung, über welches der (bevorzugt gesamte radseitige) Drehmomentfluss geleitet ist. Ist das Getriebe gesperrt, so ist der Drehmomentfluss gesperrt und eine Drehmomentübertragung in dem Antriebsstrang zwischen Drehmomentquelle und Drehmomentsenke unterbunden.

Der hier vorgeschlagene Antriebsstrang umfasst ein Getriebe, welches eine solche Parksperrenvorrichtung aufweist, mit welcher sowohl die Fahrt-Position (freier Zustand) als auch die Park-Position (sperrender Zustand) passiv, also ohne externe Energieaufnahme, haltbar ist. Zudem ist mit einer sehr geringen Leistungsaufnahme (der Spule des Hubmagnets) der abweichende (beispielsweise freie) Zustand der Parksperre wieder aufhebbar und somit auch bei einem Ausfall der Elektronik die Einnahme des normalen (beispielsweise sperrenden) Zustands der Parksperre in nahezu allen Fällen sichergestellt, beispielsweise mittels eines lokalen elektrischen Kondensators als Notspeicher. Das Getriebe ist mit gleichem Bauraum und mit nur geringfügigen Zusatzkosten im Vergleich zu einer Parksperrenvorrichtung ohne die Möglichkeit zur Entriegelung ausführbar. Zudem ist die Sicherheit hoch, dass der Antriebsstrang nur dann in Betrieb genommen wird, solange die Parksperrenvorrichtung entriegelt ist.

Gemäß einem weiteren Aspekt der vorliegenden Erfindung wird ein Kraftfahrzeug vorgeschlagen, aufweisend zumindest ein Vortriebsrad und einen Antriebsstrang nach Anspruch 12, wobei zum Vortrieb des Kraftfahrzeugs ein Drehmoment von der zumindest einen Antriebsmaschine des Antriebsstrangs an das zumindest eine Vortriebsrad abgebbar ist, und
ein Rollen des Kraftfahrzeugs mittels der Parksperrenvorrichtung in dem sperrenden Zustand des Sperrmechanismus unterbunden ist.

Das Kraftfahrzeug ist beispielsweise ein Personenkraftwagen, ein Lastkraftwagen oder ein motorisiertes Zweirad. Das Kraftfahrzeug weist einen Antriebsstrang nach einer Ausführungsform gemäß der vorhergehenden Beschreibung. Das von der zumindest einen Antriebsmaschine abgebbare Drehmoment wird über das Getriebe an das zumindest eine Vortriebsrad (Verbraucher) abgegeben. Das hier bezeichnete Getriebe ist bevorzugt ein schaltbares Übersetzungsgetriebe. Alternativ ist das Getriebe beispielsweise ein festes Übersetzungsgetriebe, also mit unveränderbarer Übersetzung, oder ein Differential oder eine Rutschkupplung. Die hier vorgeschlagene Parksperrenvorrichtung ist bevorzugt wie oben beschrieben ausgeführt und besonders bevorzugt in das Getriebe integriert.

Eine Drehbewegung des zumindest einen Vortriebsrads ist in einer Parkschaltstellung nur möglich, wenn die Parksperre (und die gesetzlich vorgeschriebene Parkbremse) gelöst sind. Im Übrigen wird auf die obige Beschreibung zu der Parksperrenvorrichtung verwiesen.

Der hier vorgeschlagene Antriebsstrang des Kraftfahrzeugs umfasst ein Getriebe, welches eine solche Parksperrenvorrichtung aufweist, mit welcher sowohl die Fahrt-Position (freier Zustand) als auch die Park-Position (sperrender Zustand) passiv, also ohne externe Energieaufnahme, haltbar ist. Zudem ist mit einer sehr geringen Leistungsaufnahme (der Spule des Hubmagnets) der abweichende (beispielsweise freie) Zustand der Parksperre wieder aufhebbar und somit auch bei einem Ausfall der Elektronik die Einnahme des normalen (beispielsweise sperrenden) Zustands der Parksperre in nahezu allen Fällen sichergestellt, beispielsweise mittels eines lokalen elektrischen Kondensators als Notspeicher. Das Getriebe ist mit gleichem Bauraum und mit nur geringfügigen Zusatzkosten im Vergleich zu einer Parksperrenvorrichtung ohne die Möglichkeit zur Entriegelung ausführbar. Zudem ist die Sicherheit hoch, dass das Kraftfahrzeug nur dann in Betrieb genommen wird, solange die Parksperrenvorrichtung entriegelt ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung, welche durch die Ansprüche definiert wird, wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Sperrmechanismus einer Parksperre im sperrenden Zustand;
- Fig. 2:: ein Betätigungsaktuator mit einem Betätigungselement in der ausgelenkten Position;
- Fig. 3:: ein Betätigungsaktuator nach Fig. 2 mit dem Betätigungselement in normaler Position;
- Fig. 4:: ein Hubmagnet mit einem Axialspalt in einer konischen Ausführungsform;
- Fig. 5:: ein Hubmagnet mit einem Axialspalt in einer rein axialen Ausführungsform;
- Fig. 6:: ein Halteelement mit einer Rastaufnahme (Stopper);
- Fig. 7:: das Halteelement nach Fig. 6 in der sperrenden Stellung;
- Fig. 8:: das Halteelement nach Fig. 6 und Fig. 7 in einer sich lösenden Stellung; und
- Fig. 9:: ein Antriebsstrang mit einer Parksperrenvorrichtung in einem Kraftfahrzeug.

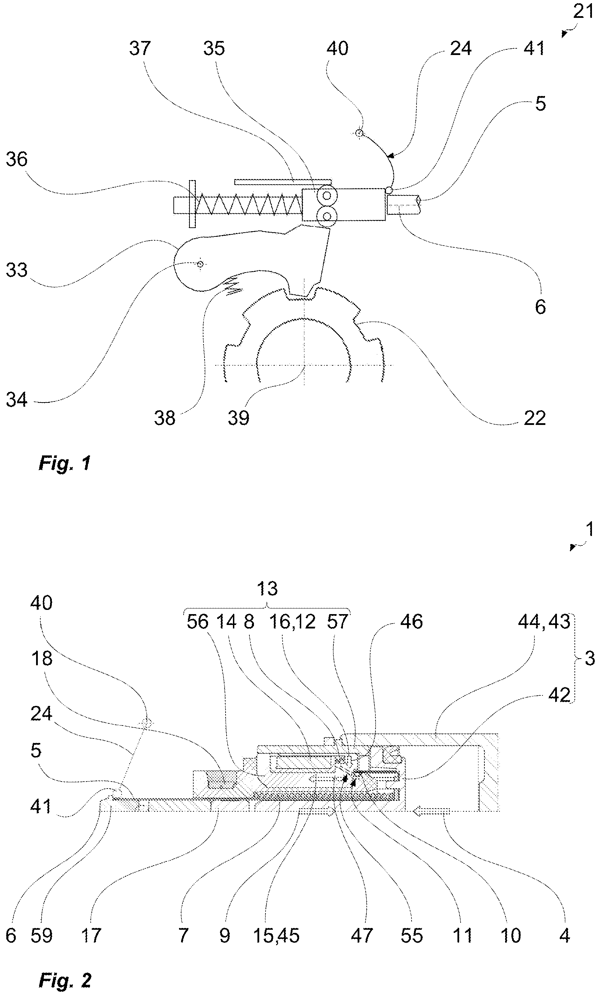

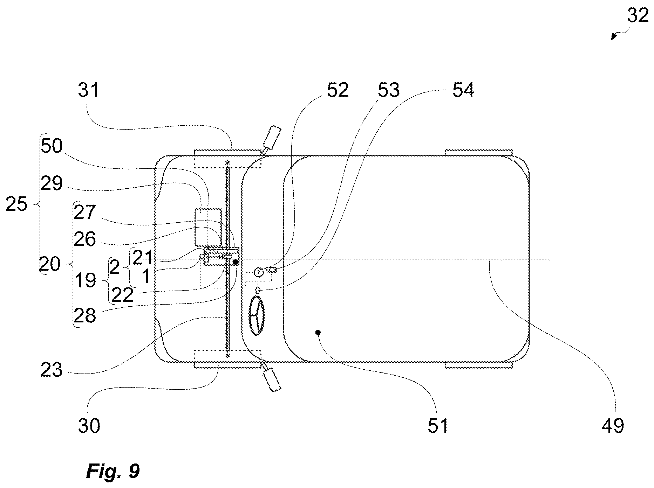

In Fig. 1 ist ein Sperrmechanismus **21** einer Parksperre **2** (vergleiche Fig. 9) in einer normal-sperrenden Konfiguration in einem sperrenden Zustand in einer schematischen Seitenansicht mit einem Sperrenrad **22** dargestellt. Der Sperrmechanismus **21** umfasst eine Parksperrenklinke **33,** welche um ihre Klinkenachse **34** rotierbar gelagert ist und hier im sperrenden Zustand gezeigt ist. Wenn der Sperrmechanismus **21** in den sperrenden Zustand überführt ist, greift die Parksperrenklinke **33** formschlüssig in das Sperrenrad **22** ein, sodass das Sperrenrad **22** blockiert ist. Dann ist eine Traverse **35** von einer Vorspannfeder **36** (hier als Druckfeder dargestellt) in eine solche Position gezwungen, dass hier (rein optional mittels der Abstützung der Traverse **35** an einem festen Gestell **37,** beispielsweise Bestandteil eines Getriebegehäuses **27,** vergleiche Fig. 9) die Parksperrenklinke **33** in dem sperrenden Zustand (Zahn-in-Lücke-Eingriff an dem Sperrenrad **22)** geometrisch blockiert ist. In einem hier nicht gezeigten freien Zustand der Traverse **35** ist die Vorspannfeder **36** gespannt (hier darstellungsgemäß nach links zusammengedrückt). Bei dieser Ausführungsform wird die Parksperrenklinke **33** mittels einer Freistellfeder **38** (beispielsweise eine Schenkelfeder oder Druckfeder) aus einer Zahnlücke des Sperrenrads **22** herausgehoben.

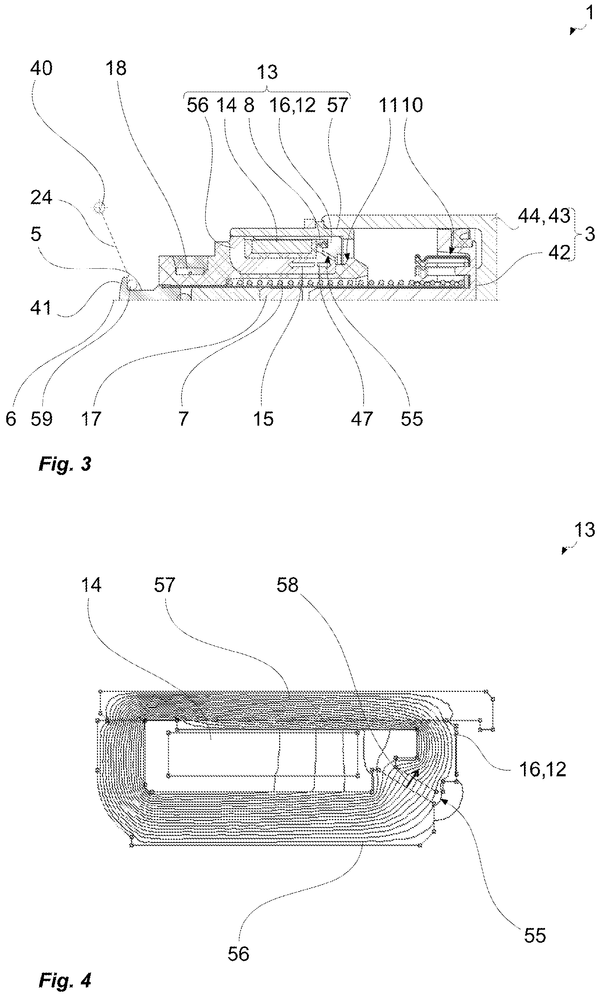

In dem normalen Zustand ist die Parksperrenklinke **33** einzig derart aus dem eingreifenden (sperrenden) Zustand in den freien Zustand überführbar, indem ein Betätigungselement **5** (hier darstellungsgemäß rechts angedeutet) eines Betätigungsaktuators **1** aktiv mit einer Axialkraft **4** entgegengesetzt der Vorspannung mittels der Vorspannfeder **36** gegen die Traverse **35** wirkt (darstellungsgemäß nach links) und die Vorspannfeder **36** spannt. Der Betätigungsaktuator **1** ist beispielsweise wie in Fig. 2 und Fig. 3 gezeigt ausgeführt. Die Parksperrenklinke **33** bleibt also, solange die Traverse **35** von dem Betätigungselement **5** des Betätigungsaktuators **1** ausgelenkt ist, in dem freien Zustand und das Sperrenrad **22** ist frei um seine Radachse **39** rotierbar.

In dieser vorteilhaften Ausführungsform umfasst die Parksperre **2** rein optional weiterhin ein Entriegelungselement **24,** welches in der gezeigten Ausführungsform ein um eine Schwenkachse **40** verschwenkbarer Hebel ist. Rein optional verläuft die Schwenkachse **40** senkrecht zu der Betätigungsachse **6.** Das hier gezeigte Entriegelungselement **24** wirkt mit seiner Betätigungsspitze **41** (rein optional unmittelbar) auf die Traverse **35,** sodass bei dieser Ausführungsform mit einem Schwenken im Uhrzeigersinn um die Schwenkachse **40** die Parksperrenklinke **33** aus dem eingreifenden (sperrenden) Zustand in den freien Zustand überführbar ist. Das Betätigungselement **5** kann dabei in seiner ersten Position (Park-Position) verbleiben.

In Fig. 2 ist ein Betätigungsaktuator **1** mit einem Betätigungselement **5** in einer ausgelenkten Position in einer schematischen Schnittansicht gezeigt. Der Betätigungsaktuator **1** ist beispielsweise zum Betätigen eines Sperrmechanismus **21** gemäß Fig. 1 eingerichtet. Das Betätigungselement **5** ist entlang einer Betätigungsachse **6** aktiv mittels eines Axialtriebmittels **3** bewegbar, sodass darstellungsgemäß das Betätigungselement **5** von rechts nach links bewegbar ist. Das Axialtriebmittel **3** ist hier als fluidische, bevorzugt hydraulische, Nehmereinheit ausgeführt. Dabei wird ein Nehmerkolben **42** in einem Nehmerzylinder **43** (Gegenlager **44)** von einem Fluid gesteuert von einer normalen (hier ersten) Position in eine ausgelenkte (hier zweite) Position gedrückt. Die resultierende Axialkraft **4** zwingt somit das Betätigungselement **5** darstellungsgemäß nach links. Hierbei ist von dem Nehmereinheit keine Zugkraft auf das Betätigungselement **5** übertragbar. Vielmehr ist das Betätigungselement **5** mittels eines ersten Energiespeicherelements **7** (hier einer koaxial zu der Betätigungsachse **6** angeordneten Schraubendruckfeder) darstellungsgemäß nach rechts vorgespannt. Es ist also von dem ersten Energiespeicherelement **7** eine zu der Axialkraft **4** antagonistische Speicherkraft **9** auf den Nehmerkolben **42** und somit auf das Betätigungselement **5** ausgeübt. Ohne externe Energieaufnahme (hier in Form von einem fluidischen Druck) wird von dem Betätigungselement **5** also (passiv) die normale Position (vergleiche Fig. 3) eingenommen.

Hier ist ein Stopperelement **10** vorgesehen, welches mit dem Axialtriebmittel 3 fest verbunden ist. Das Stopperelement **10** ist hier als Rastelement, genauer als (Mehrzahl von) Federlaschen, mit einer Kontaktstelle ausgeführt. Die korrespondierende Stopperkomponente **11** ist mit dem Gegenlager **44** des Axialtriebmittels 3 fest verbunden. Die Stopperkomponente **11** ist hier als komplementäre Rastaufnahme ausgeführt, wobei die Kontaktstelle des Stopperelements **10** mittels eines entsprechenden Hinterschnitts haltbar ist. Das Stopperelement **10** gleitet also, wenn eine ausreichende Axialkraft **4** des Axialtriebmittels **3** anliegt, in die hier als Hinterschnitt ausgeführte Stopperkomponente **11** hinein (Formschluss), bevorzugt nach Art eines Schnappverschlusses. Die Stopperkraft **45** ist hierbei derart gering, dass damit allein keine Sicherung gegen die Speicherkraft **9** des ersten Energiespeicherelements **7** erzeugbar ist. Vielmehr ist die Speicherkraft **9** derart groß, dass die Verbindung zwischen dem Stopperelement **10** und der Stopperkomponente **11** damit lösbar ist, sodass das Betätigungselement **5** passiv in die normale Position überführt wird. Wenn keine ausreichende Axialkraft **4** erzeugt ist, gleitet das Stopperelement **10** aus der Stopperkomponente **11** heraus und das Betätigungselement **5** nimmt die normale Position ein.

Weil in einem Kraftfahrzeug **32** die ausgelenkte Position (mit dem Sperrmechanismus **21** gemäß Fig. 1 Fahrt-Position) im Betrieb ein dauerhafter Zustand ist, ist hier eine geringe oder keine externe Energieaufnahme gewünscht. Dafür ist hier ein Halteelement **12** vorgesehen. Mittels des Halteelements **12** ist das Stopperelement **10** (zumindest zusätzlich) gegen ein Herausgleiten während der ausgelenkten Position gesichert, hier mittels Formschluss (Schnappverschluss). Die Haltekraft **46** des Halteelements **12** ist ausreichend, um die Verbindung zwischen dem Stopperelement **10** und der Stopperkomponente **11** entgegen der Speicherkraft **9** des ersten Energiespeicherelements **7** zu fixieren.

Das Halteelement **12** selbst ist bei dieser Ausführungsform mittels eines zweiten Energiespeicherelements **8** in die gezeigte sperrende Stellung mittels einer Vorhaltekraft **47** vorgespannt und sichert so die Kontaktstelle der Federlasche (Stopperelement **10)** in der Rastiernut (Stopperkomponente **11).** Wenn die Spule **14** bestromt wird, wird ein solches Magnetfeld erzeugt, dass eine in Richtung der Axialkraft **4** weisende Magnetkraft **15** auf den Hubkolben **16** und somit auf das damit einstückig gebildete Halteelement **12** aufgebracht wird. Die Vorhaltekraft **47** wird überwunden und das Stopperelement **10** löst sich von der Stopperkomponente **11,** wenn eine ausreichend geringe (beispielsweise eine vernachlässigbare) Axialkraft **4** aufgebracht ist. Infolge der Speicherkraft **9** des ersten Energiespeicherelements **7** wird das Betätigungselement **5** wieder in die normale Position überführt.

Der Hubmagnet **13** umfasst in der gezeigten Ausführungsform einen inneren Rückschluss **56** und einen äußeren Rückschluss **57,** welche den Hubkolben **16** U-förmig umgeben. In diesen Rückschlüssen **56,57** verläuft (der Hauptanteil) des Magnetfelds der Spule **14.** Zum einen ist der Hubkolben **16** wie bei einer Tauchspule aktuiert und zum anderen ist ein Axialspalt **55** (hier geneigt) vorgesehen, wobei hier bevorzugt zugleich ein Anschlag für die Axialbewegung des Hubkolbens **16** gebildet ist. Der Axialspalt **55** weist eine axiale Ausdehnung auf, welche gleich dem gewünschten Hub des Halteelements **12** zum Lösen und Sperren des Stopperelements **10** ist.

Weiterhin ist in der gezeigten Ausführungsform (rein optional) ein Magnetfeldsensor **18** und ein Positionsmagnet **17** (Permanentmagnet) vorgesehen, wobei der Magnetfeldsensor **18** relativ zu dem Gegenlager **44** des Axialtriebmittels **3** fixiert ist und der Positionsmagnet **17** in das Betätigungselement **5** integriert ist. Damit ist die Position des Betätigungselements **5** elektronisch erfassbar beziehungsweise ermittelbar.

Weiterhin ist in der gezeigten Ausführungsform (rein optional) das Betätigungselement **5** separat von dem Axialtriebmittel **3** gebildet, hier dem Nehmerkolben **42,** Dies ist vorteilhaft, wenn der Sperrmechanismus **21** entriegelt werden soll. Dann kann der Nehmerkolben **42** in die passive Stellung zurückkehren, während sich das Betätigungselement **5** noch in der ausgelenkten Position befindet. In einer Ausführungsform ist das Betätigungselement **5** ausschließlich mittels des Axialtriebmittels **3** in die ausgelenkte Position überführbar. In der gezeigten Ausführungsform ist (rein optional) zusätzlich ein Entriegelungselement **24** vorgesehen. Mittels des Entriegelungselements **24** ist von außen (beispielsweise über eine Schraube oder einen Druckknopf) in die ausgelenkte Position überführbar. Dies stellt eine vorteilhafte Variante gegenüber der Ausführungsform gemäß Fig. 1 dar, weil dadurch der Magnetfeldsensor **18** mitgenutzt werden kann. Damit ist eine Anzeige oder eine elektronische Sperrung einer Inbetriebnahme eines Kraftfahrzeugs **32** (beispielsweise über den Bordcomputer des Kraftfahrzeugs **32)** einfach umsetzbar.

Das Entriegelungselement **24** ist hier schwenkbar um eine Schwenkachse **40** ausgeführt, alternativ linear bewegbar ausgeführt. Die Betätigungsspitze **41** des Entriegelungselements **24** wirkt unmittelbar gegen einen Flansch des Betätigungselements **5,** welcher hier (rein optional) an dessen sperrenseitiger Spitze angeordnet ist. Das Entriegelungselement **24** ist also dafür darstellungsgemäß mit dem Uhrzeigersinn nach links verschwenkt. Mittels des kraftübertragenden Kontakts von einer Betätigungsspitze **41** auf den Betätigungskopf **59** ist das Betätigungselement **5** in die erste Position gezwungen. Das Betätigungselement **5** ist entgegen der Speicherkraft **9** des ersten Energiespeicherelements **7** in der ersten Position gehalten. Es sei darauf hingewiesen, dass bevorzugt das Betätigungselement **5** nicht von dem Entriegelungselement **24** in der gezeigten ausgelenkten Position gehalten ist, sondern mittels des Zusammenwirkens von dem Stopperelement **10,** der Stopperkomponente **11** und dem Halteelement **12** (beziehungsweise dem zweiten Energiespeicherelement **8).** Ein zusätzliches Feststellelement zum Halten des Entriegelungselements **24** in der gezeigten ausgeschwenkten Lage ist damit nicht notwendig. Beispielsweise ist das Entriegelungselement **24** entgegen der gezeigten entriegelnden Position in eine normale Position vorgespannt und kehrt selbsttätig (passiv) nach der Betätigung in die normale Position zurück. Alternativ ist das Entriegelungselement **24** frei beweglich oder wird mit dem Betätigungselement **5** dauerhaft mitgeführt.

In Fig. 3 ist ein Betätigungsaktuator **1** nach Fig. 2 mit dem Betätigungselement **5** in normaler Position gezeigt. Der Nehmerkolben **42** ist mittels der Speicherkraft **9** des ersten Energiespeicherelements **7** in die normale Position zurückgeführt. Die (rein optionale) Ausführungsform des Stopperelements **10** als Mehrzahl von koaxial zu der Betätigungsachse **6** angeordneten Federlaschen, welche hier mit dem Nehmerkolben **42** fest verbunden sind, ist hier gut erkennbar. Weiterhin ist die (rein optionale) Ausführungsform des Halteelements **12** als umlaufender Ring nachvollziehbar. Es sei darauf hingewiesen, dass sich das Halteelement **12** wieder in der sperrenden Stellung befindet, also die Spule **14** unbestromt beziehungsweise ausreichend gering bestromt ist, sodass die Vorhaltekraft **47** das Halteelement **12** in die sperrende Stellung überführt. Die Axialkraft **4** ist in der Lage, die Vorhaltekraft **47** zu überwinden und somit das Stopperelement **10** mit der Stopperkomponente **11** zu verrasten, woraufhin das Halteelement **12** wieder in die sperrende Stellung zurückkehrt. Der ganze Vorgang ist ohne Betätigung der Spule **14** ausführbar.

In Fig. 4 ist ein Hubmagnet **13** mit einem Axialspalt **55** in einer konischen Ausführungsform in einer schematischen Schnittansicht gezeigt. Dabei sind in dieser Ansicht zur Verdeutlichung die Umrisse der einzelnen Bauteile des Hubmagneten **13** und die Magnetfeldlinien der stromdurchflossenen Spule **14** innerhalb und außerhalb der Bauteile gezeigt. Der Hubmagnet **13** umfasst in dieser Ausführungsform einen inneren Rückschluss **56,** einen äußeren Rückschluss **57,** sowie eine Spule **14** und einen Hubkolben **16** (wie in Fig. 2 und Fig. 3 gezeigt). Der Hubkolben **16** umfasst hier ein Halteelement **12,** welcher bevorzugt einstückig mit dem Hubkolben **16** gefertigt ist. Der Hubkolben **16** ist in dieser Ausführungsform innerhalb des äußeren Rückschlusses **57** und der Spule **14** geführt. Dabei umschließen die beiden Rückschlüsse **56,57** die Spule **14** und bilden eine U-förmige Öffnung am darstellungsgemäß rechten Ende, in welchem der Hubkolben **16** axial derart beweglich gelagert ist, dass hier der Axialspalt **55** zwischen dem inneren Rückschluss **56** und dem Halteelement **12** gebildet ist. In dieser Ausführungsform ist das spulenabgewandte Ende des inneren Rückschluss **56** konisch ausgeführt, ebenso wie das darstellungsgemäß untere Ende des Hubkolbens 16.

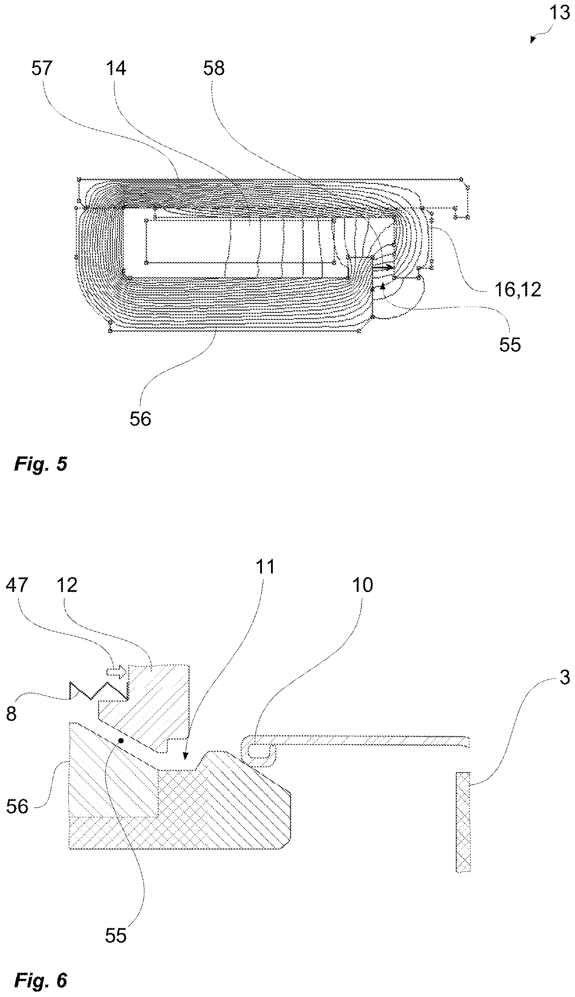

Aufgrund der Geometrie des inneren Rückschlusses **56** und des Hubkolbens **16** ergibt sich in dieser Ausführungsform ein Axialspalt **55** mit einer Spalt-Normale **58** unter einem Winkel zwischen der Betätigungsachse **6** und der Radialen der Betätigungsachse **6** (vergleiche Fig. 2). Die konische Ausführung des Axialspalts **55,** mit einer zur Betätigungsachse **6** geneigten Spalt-Normalen **58,** hat in dieser axialen Beabstandung zwischen Halteelement **12** und inneren Rückschluss **56** eine Erhöhung der Magnetfeldliniendichte zur Folge, was zu einer erhöhten Magnetkraft **15** im Vergleich zu einem rein axialen Axialspalt **55** führt (vergleiche Fig. 5).

In Fig. 5 ist ein Hubmagnet **13** mit einem Axialspalt **55** in einer rein axialen Ausführungsform in einer schematischen Schnittansicht gezeigt. Dabei sind in dieser Ansicht zur Verdeutlichung die Umrisse der einzelnen Bauteile des Hubmagneten **13** und die Magnetfeldlinien der stromdurchflossenen Spule **14** innerhalb und außerhalb der Bauteile gezeigt. Diese Ausführungsform ist ohne Ausschluss der Allgemeinheit rein der Übersichtlichkeit halber weitestgehend mit der in Fig. 4 gezeigten Ausführungsform identisch, sodass insoweit auf die dortige Beschreibung verwiesen wird und hier nur auf die Unterschiede eingegangen wird.

In dieser Ausführungsform ist das spulenabgewandte Ende des inneren Rückschluss **56** rein axial ausgeführt, ebenso wie das darstellungsgemäß untere Ende des Hubkolbens **16.** Diese Ausführungsform der Enden des Hubkolbens **16** und des inneren Rückschluss **56,** ergeben eine geringere Magnetfeldliniendichte innerhalb des Axialspalts **55** als in der konischen Ausführungsform in Fig. 4. Eine geringere Magnetfeldliniendichte induziert eine geringere Magnetkraft **15,** welche den Hubkolben **16** zur Spule **14** hin zieht. Der Axialspalt **55** umfasst dabei eine Spalt-Normale **58,** welche hier eine rein axiale Orientierung aufweist. Es sei darauf hingewiesen, dass bei einer größeren Beabstandung zwischen dem Halteelement **12** und dem inneren Rückschluss **56** eine geringere Magnetkraft **15** notwendig ist, um den Hubkolben **16** zur Spule **14** hin zuziehen. Das bedeutet, dass je nach Axialhub des Hubkolbens **16,** entweder die Geometrie gemäß Fig. 4 oder wie hier gezeigt vorteilhafter ist.

In Fig. 6 ist ein Halteelement **12** mit einer Stopperkomponente **11,** welche als Rastaufnahme ausgeführt ist, und einem Stopperelement **10,** welches als Rastelement, genauer als Schnapphaken ausgeführt ist, in einer schematischen Schnittansicht gezeigt. Die Rastaufnahme (Stopperkomponente **11)** ist derart ausgeführt, dass ein korrespondierendes Rastelement (Stopperelement 10) aufnehmbar ist. Das Halteelement **12** ist zum Fixieren des Stopperelements **10** in der Stopperkomponente **11** eingerichtet und von der Vorhaltekraft **47** des zweiten Energiespeicherelements 8 darstellungsgemäß nach rechts vorgespannt und von der Magnetkraft **15** des Hubmagnets **13** darstellungsgemäß nach links bewegbar (vergleiche Fig. 2 bis Fig. 5).

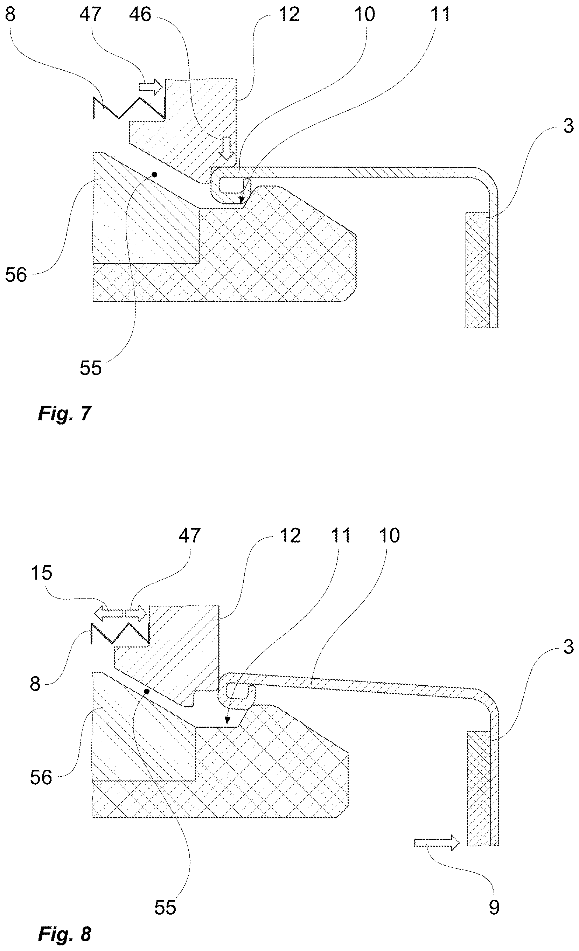

In Fig. 7 ist das Halteelement **12** nach Fig. 6 in der sperrenden Stellung gezeigt. Die Haltekraft **46** des Halteelements **12** resultiert aus der das Halteelement **12** führenden Anlage, wenn das Halteelement **12** mittels der Vorhaltekraft **47** in der gezeigten relativen (sperrenden) Stellung gehalten ist, während das Stopperelement **10** in der Stopperkomponente **11** aufgenommen ist. Damit ist das Betätigungselement 5 in der ausgelenkten Position axial fixiert, ohne dass eine externe Energieaufnahme notwendig ist.

In Fig. 8 ist das Halteelement **12** nach Fig. 6 und Fig. 7 in einer sich lösenden Stellung gezeigt. Die Haltekraft **46** des Halteelements **12** ist aufgehoben, indem von der Magnetkraft **15** die Vorhaltekraft **47** des zweiten Energiespeicherelements **8** überwunden ist. Bei ausbleibender (oder zu geringer) Axialkraft **4** wird nun das Betätigungselement **5** wieder aus der ausgelenkten Position herausgeführt, weil die Speicherkraft **9** des ersten Energiespeicherelements **7** eine radiale Auslenkung des Stopperelements **10** bewirkt und sich das Stopperelement **10** aus der Stopperkomponente **11** löst.

In Fig. 9 ist rein schematisch ein Kraftfahrzeug **32** mit einem Antriebsstrang **25** in einer Draufsicht gezeigt, wobei eine Antriebsmaschine **29,** hier optional als elektrische Antriebsmaschine **29** dargestellt, senkrecht zu einer Längsachse **49,** entlang einer Motorachse **50** angeordnet ist. Die Motorachse **50** ist in Fahrtrichtung vor einer Fahrerkabine **51** des Kraftfahrzeugs **32** angeordnet. Der Antriebsstrang **25** ist zum Vortrieb des Kraftfahrzeugs **32** mittels Antreiben eines linken Vortriebsrads **30** und eines rechten Vortriebsrads **31** (hier optional der Vorderachse des Kraftfahrzeugs **32)** mittels einer Drehmomentabgabe von der Antriebsmaschine **29** über ein Getriebe **20** eingerichtet, und so ein gestrichelt dargestellter Drehmomentfluss **23** (hier mit der Richtung entsprechend einem Zugmoment dargestellt) gebildet. Beispielsweise ist ein Drehmomentübertragungsgetriebe **26** ein Teil eines Getriebes **20,** welches mittels eines Getriebeschalthebels **52** in der Fahrerkabine **51** von einem Fahrzeugfahrer schaltbar ist.

In dem Drehmomentfluss **23** ist nun eine Parksperrenvorrichtung **19** angeordnet, womit das linke Vortriebsrad **30** und das rechte Vortriebsrad **31** blockierbar sind. Die Parksperrenvorrichtung **19** umfasst ein Sperrenrad **22,** beispielsweise ein Getrieberad des Drehmomentübertragungsgetriebes **26** des Getriebes **20** oder ein zusätzliches Rad des Drehmomentübertragungsgetriebes **26,** und eine Parksperre **2,** wobei die Parksperre **2** einen Sperrmechanismus **21** und einen Betätigungsaktuator **1** umfasst. Der Sperrmechanismus **21** ist beispielsweise wie in Fig. 1 dargestellt ausgeführt. Hier ist eine Ausführungsform der Parksperrenvorrichtung **19** gezeigt, bei welcher (optional) der Sperrmechanismus **21** innerhalb des Getrieberaums **28** in einem Getriebegehäuse **27** des Getriebes **20** und der Betätigungsaktuator **1** außerhalb des Getriebegehäuses **27** angeordnet ist.

Das Sperrenrad **22** ist in dem Drehmomentfluss **23** derart angeordnet, dass dadurch ein Wegrollen des Kraftfahrzeugs **32** verhinderbar ist. Die Parksperrenvorrichtung **19** ist hier mit zumindest einem der folgenden Bedienelemente betätigbar:
- von einem Getriebeschalthebel **52,** beispielsweise mittels einer Parkschaltstellung "P",
- einem Parkhebel **53;** und/oder
- einem Zündknopf **54** (alternativ einem Zündschlüssel).

Weiterhin ist bevorzugt die Parksperrenvorrichtung **19** automatisiert betätigbar beispielsweise wird beim Verlassen des Kraftfahrzeugs **32** (beispielsweise nach Abschließen) die Parksperre **2** selbsttätig eingelegt.

Mit dem hier vorgeschlagenen Betätigungsaktuator ist sowohl die Fahrt-Position als auch die Park-Position passiv haltbar. Zudem ist mit einer sehr geringen Leistungsaufnahme der von einem normalen Zustand abweichende (beispielsweise freie) Zustand der Parksperre wieder aufhebbar.

**Bezugszeichenliste**

| | | | |
|---|---|---|---|
| 1 | Betätigungsaktuator | 32 | Kraftfahrzeug |
| 2 | Parksperre | 33 | Parksperrenklinke |
| 3 | Axialtriebmittel | 34 | Klinkenachse |
| 4 | Axialkraft | 35 | Traverse |
| 5 | Betätigungselement | 36 | Vorspannfeder |
| 6 | Betätigungsachse | 37 | Gestell |
| 7 | erstes Energiespeicherelement (Stößel) | 38 | Freistellfeder |
| | | 39 | Radachse |
| 8 | zweites Energiespeicherelement (Halteelement) | 40 | Schwenkachse |
| | | 41 | Betätigungsspitze |
| 9 | Speicherkraft | 42 | Nehmerkolben |
| 10 | Stopperelement | 43 | Nehmerzylinder |
| 11 | Stopperkomponente | 44 | Gegenlager |
| 12 | Halteelement | 45 | Stopperkraft |
| 13 | Hubmagnet | 46 | Haltekraft |
| 14 | Spule | 47 | Vorhaltekraft |
| 15 | Magnetkraft | 48 | Rampe |
| 16 | Hubkolben | 49 | Längsachse |
| 17 | Positionsmagnet | 50 | Motorachse |
| 18 | Magnetfeldsensor | 51 | Fahrerkabine |
| 19 | Parksperrenvorrichtung | 52 | Getriebeschalthebel |
| 20 | Getriebe | 53 | Parkhebel |
| 21 | Sperrmechanismus | 54 | Zündknopf |
| 22 | Sperrenrad | 55 | Axialspalt |
| 23 | Drehmomentfluss | 56 | innerer Rückschluss |
| 24 | Entriegelungselement | 57 | äußerer Rückschluss |
| 25 | Antriebsstrang | 58 | Spalt-Normale |
| 26 | Drehmomentübertragungsgetriebe | 59 | Betätigungskopf |
| 27 | Getriebegehäuse | | |
| 28 | Getrieberaum | | |
| 29 | Antriebsmaschine | | |
| 30 | linkes Vortriebsrad | | |
| 31 | rechtes Vortriebsrad | | |

## Patentansprüche

1. Betätigungsaktuator (1) für eine Parksperre (2), aufweisend zumindest die folgenden Komponenten:
- ein Axialtriebmittel (3) zum Übertragen einer Axialkraft (4);
- ein Betätigungselement (5) mit einer Betätigungsachse (6), welches mittels der Axialkraft (4) des Axialtriebmittels (3) von einer normalen Position in eine ausgelenkte Position axial bewegbar ist;
- ein Stopperelement (10);
- eine zu dem Stopperelement (10) korrespondierende Stopperkomponente (11) ; sowie
- ein Halteelement (12), welches zwischen einer gelösten Stellung und einer sperrenden Stellung bewegbar ist, wobei während sich das Betätigungselement (5) in der ausgelenkten Position befindet mit dem Halteelement (12) in der sperrenden Stellung das Stopperelement (10) und die Stopperkomponente (11) zueinander fixiert sind,
wobei weiterhin ein Hubmagnet (13) mit einer Spule (14) und einem mittels einer von der Spule (14) erzeugbaren Magnetkraft (15) axial bewegbaren Hubkolben (16) vorgesehen ist, und
wobei das Halteelement (12) mit dem axial bewegbaren Hubkolben (16) fest verbunden ist,
**dadurch gekennzeichnet, dass**
der von der Spule (14) erzeugte magnetische Fluss durch einen Rückschluss geleitet wird,
der Rückschluss einen radial inneren Rückschluss (56) und einen radial äußeren Ruckschluss (57) umfasst, welche den Hubkolben (16) U-förmig umgeben, zwischen dem Hubkolben (16) und dem inneren Rückschluss (56) wenigstens in einer der beiden Stellungen des Halteelements (12) ein Axialspalt (55) vorliegt, und
der magnetische Fluss durch die beiden Flächen von Hubkolben (16) und
inneren Rückschluss (56) geleitet wird, die den Axialspalt (55) bilden.

2. Betätigungsaktuator (1) nach Anspruch 1, wobei die beiden Flächen von Hubkolben (16) und innerer Rückschluss (56) so zueinander ausgerichtet sind, dass bei bestromter Spule (14) der Hubkolben (16) in Richtung innerer Rückschluss (56) bewegt wird, so dass der Axialspalt (56) verringert wird.

3. Betätigungsaktuator (1) nach Anspruch 2, wobei der Hubkolben (16) und der innere Rückschluss (56) miteinander in Kontakt bringbar sind.

4. Betätigungsaktuator (1) nach Anspruch 2 oder 3, wobei
die Spalt-Normale (58) des Axialspalts (55) zur Betätigungsachse (6) geneigt oder rein axial ausgerichtet ist.

5. Betätigungsaktuator (1) nach einem der vorhergehenden Ansprüche, wobei weiterhin von dem Hubmagnet (13) ein zweites Energiespeicherelement (8) umfasst ist, von welchem eine zu der Magnetkraft (15) antagonistische Vorhaltekraft (47) auf den Hubkolben (16) vorgehalten ist,
wobei bevorzugt die Magnetkraft (15) eine Zugkraft ist.

6. Betätigungsaktuator (1) nach einem der Ansprüche 1 bis 3, wobei die Spule (14) vom inneren Rückschluss (56) aufgenommen ist,
der innere Rückschluss (56) koaxial zur Betätigungsachse (6) angeordnet ist und das Betätigungselement (5) und/oder einen vom Axialtriebmittel (3) umfassten Nehmerkolben (42) wenigstens teilweise axial überlappt.

7. Betätigungsaktuator (1) nach Anspruch 6, wobei der äußere Rückschluss (57) über eine Presspassung fest mit dem inneren Rückschluss (56) verbunden ist.

8. Parksperre (2) für eine Parksperrenvorrichtung (19) eines Getriebes (20), aufweisend zumindest die folgenden Komponenten:
- einen Sperrmechanismus (21) zum Sperren eines Sperrenrads (22) in einem Drehmomentfluss (23), wobei im Einsatz von dem Sperrmechanismus (21) in einem sperrenden Zustand das Sperrenrad (22) blockiert und in einem freien Zustand das Sperrenrad (22) freigegeben ist; und
- einen Betätigungsaktuator (1) nach einem der vorhergehenden Ansprüche, wobei in der ausgelenkten Position des Betätigungselements (5) der Sperrmechanismus (21) aus dem sperrenden Zustand herausgeführt ist, und wobei die normale Position des Betätigungselements (5) dem sperrenden Zustand des Sperrmechanismus (21) entspricht.

9. Parksperre (2) nach Anspruch 8, wobei
weiterhin ein Entriegelungselement (24) vorgesehen ist, welches zwischen einer normalen Position und einer entriegelnden Position bewegbar ist, wobei in der entriegelnden Position der freie Zustand des Sperrmechanismus (21) gehalten ist und in der normalen Position die normal-sperrende Funktion der Parksperre (2) sichergestellt ist.

10. Parksperrenvorrichtung (19), aufweisend
ein Sperrenrad (22) zum Anordnen in einem sperrbaren Drehmomentfluss (23) und eine Parksperre (2) nach Anspruch 8 oder Anspruch 9, wobei das Sperrenrad (22) mittels des Sperrmechanismus (21) blockierbar ist.

11. Getriebe (20) für einen Antriebsstrang (25), aufweisend zumindest die folgenden Komponenten:
- eine Parksperrenvorrichtung (19) nach Anspruch 10;
- ein Drehmomentübertragungsgetriebe (26), welches das Sperrenrad (22) umfasst; und
- ein Getriebegehäuse (27), welches einen Getrieberaum (28) umgibt,
wobei der Sperrmechanismus (21) der Parksperre (2), bevorzugt vollständig, besonders bevorzugt die gesamte Parksperrenvorrichtung (19), in dem Getrieberaum (28) angeordnet ist.

12. Antriebsstrang (25), aufweisend zumindest die folgenden Komponenten:
- zumindest eine Antriebsmaschine (29) zum Abgeben eines Drehmoments;
- zumindest einen Verbraucher (30,31) zum Aufnehmen eines Drehmoments; und
- ein Getriebe (20) nach Anspruch 11,
wobei die zumindest eine Antriebsmaschine (29) und der zumindest eine Verbraucher (30,31) mittels des Getriebes (20) drehmomentübertragend miteinander verbunden sind,
wobei ein Drehmomentübertragen zwischen der Antriebsmaschine (29) und dem zumindest einen Verbraucher (30,31) mittels der Parksperrenvorrichtung (19) in dem sperrenden Zustand des Sperrmechanismus (21) unterbunden ist.

13. Kraftfahrzeug (32), aufweisend
zumindest ein Vortriebsrad (30,31) und einen Antriebsstrang (25) nach Anspruch 12,
wobei zum Vortrieb des Kraftfahrzeugs (32) ein Drehmoment von der zumindest einen Antriebsmaschine (29) des Antriebsstrangs (25) an das zumindest eine Vortriebsrad (30,31) abgebbar ist, und
ein Rollen des Kraftfahrzeugs (32) mittels der Parksperrenvorrichtung (19) in dem sperrenden Zustand des Sperrmechanismus (21) unterbunden ist.

## Claims

1. An actuator (1) for a parking lock (2), comprising at least the following components:
- an axial drive means (3) for transmitting an axial force (4);
- an actuating element (5) having an actuating axis (6), which is axially moveable from a normal position into a deflected position by means of the axial force (4) of the axial drive means (3);
- a stopper element (10);
- a stopper component (11) corresponding to the stopper element (10);
and
- a holding element (12) which is moveable between a released position and a locking position, wherein, while the actuating element (5) is in the deflected position, the stopper element (10) and the stopper component (11) are fixed relative to one another with the holding element (12) in the locking position,
wherein a solenoid (13) having a coil (14) and a piston (16) that is axially moveable by means of a magnetic force (15) generated by the coil (14) is also provided, and
wherein the holding element (12) is fixedly connected to the axially moveable piston (16),
**characterised in that**
the magnetic flux generated by the coil (14) is conducted through a return path,
the return path comprises a radially inner return path (56) and a radially outer return path (57), which surround the piston (16) in a U-shape, an axial gap (55) is present between the piston (16) and the inner return path (56) in at least one of the two positions of the holding element (12), and
the magnetic flux is conducted through the two surfaces of the piston (16) and the inner return path (56), which form the axial gap (55).

2. The actuator (1) according to claim 1, wherein the two surfaces of the piston (16) and the inner return path (56) are aligned relative to one another such that, when the coil (14) is energized, the piston (16) is moved in the direction of the inner return path (56), so that the axial gap (56) is reduced.

3. The actuator (1) according to claim 2, wherein the piston (16) and the inner return path (56) can be brought into contact with one another.

4. The actuator (1) according to claim 2 or 3, wherein the gap normal (58) of the axial gap (55) is inclined to the actuating axis (6) or is aligned purely axially.

5. The actuator (1) according to one of the preceding claims, wherein furthermore a second energy storage element (8) is comprised by the solenoid (13), from which a retaining force (47) antagonistic to the magnetic force (15) is retained on the piston (16), wherein the magnetic force (15) is preferably a tensile force.

6. The actuator (1) according to one of claims 1 to 3, wherein the coil (14) is received by the inner return path (56), the inner return path (56) is arranged coaxially to the actuating axis (6) and at least partially axially overlaps the actuating element (5) and/or a slave piston (42) comprised by the axial drive means (3).

7. The actuator (1) according to claim 6, wherein the outer return path (57) is fixedly connected to the inner return path (56) via a press fit.

8. A parking lock (2) for a parking lock device (19) of a transmission (20), comprising at least the following components:
- a locking mechanism (21) for locking a locking wheel (22) in a torque flow (23), wherein, when the locking mechanism (21) is in a locking state, the locking wheel (22) is blocked and, in a free state, the locking wheel (22) is released; and
- an actuator (1) according to one of the preceding claims, wherein, in the deflected position of the actuating element (5), the locking mechanism (21) is guided out of the locking state, and wherein the normal position of the actuating element (5) corresponds to the locking state of the locking mechanism (21).

9. The parking lock (2) according to claim 8, wherein
an unlocking element (24) is further provided, which is moveable between a normal position and an unlocking position, wherein the free state of the locking mechanism (21) is maintained in the unlocking position and the normal locking function of the parking lock (2) is ensured in the normal position.

10. A parking lock device (19), having
a locking wheel (22) for arrangement in a lockable torque flow (23) and a parking lock (2) according to claim 8 or claim 9, wherein the locking wheel (22) can be blocked by means of the locking mechanism (21).

11. A transmission (20) for a drive train (25), having at least the following components:
- a parking lock device (19) according to claim 10;
- a torque transmitting transmission (26) comprising the locking wheel (22); and
- a transmission housing (27) which surrounds a transmission chamber (28), wherein the locking mechanism (21) of the parking lock (2), preferably completely, particularly preferably the entire parking lock device (19), is arranged in the transmission chamber (28).

12. A drive train (25), having at least the following components:
- at least one drive unit (29) for outputting a torque;
- at least one consumer (30, 31) for receiving a torque; and
- a transmission (20) according to claim 11,
wherein the at least one drive unit (29) and the at least one consumer (30, 31) are connected to one another in a torque-transmitting manner by means of the transmission (20),
wherein torque transmission between the drive unit (29) and the at least one consumer (30, 31) is prevented
by means of the parking lock device (19) in the locking state of the locking mechanism (21).

13. A motor vehicle (32), having
at least one propulsion wheel (30, 31) and one drive train (25) according to claim 12, wherein a torque can be transmitted from the at least one drive unit (29) of the drive train (25) to the at least one propulsion wheel (30, 31) in order to propel the motor vehicle (32), and
rolling of the motor vehicle (32) is prevented by means of the parking lock device (19) in the locking state of the locking mechanism (21).

## Revendications

1. Actionneur (1) pour un verrou de stationnement (2), présentant au moins les composants suivants :
- un moyen d'entraînement axial (3) pour transmettre une force axiale (4) ;
- un élément d'actionnement (5) comportant un axe d'actionnement (6), qui peut être déplacé axialement d'une position normale à une position déviée au moyen de la force axiale (4) du moyen d'entraînement axial (3) ;
- un élément de butée (10) ;
- un composant de butée (11) correspondant
à l'élément de butée (10) ; ainsi que
- un élément de retenue (12) qui est mobile entre une position libérée et une position de verrouillage, dans lequel l'élément de butée (10) et le composant de butée (11) sont fixés l'un par rapport à l'autre tandis que l'élément d'actionnement (5) se trouve dans la position déviée avec l'élément de retenue (12) dans la position de verrouillage,
dans lequel un aimant de levage (13) comportant une bobine (14) et un piston de levage (16) qui est mobile axialement au moyen d'une force magnétique (15) qui peut être générée par la bobine (14), est également prévu, et
dans lequel l'élément de retenue (12) est relié de manière fixe au piston de levage (16) mobile axialement,
**caractérisé en ce que**
le flux magnétique généré par la bobine (14) est guidé par un chemin de retour,
le chemin de retour comprend un chemin de retour (56) radialement intérieur et un chemin de retour (57) radialement extérieur qui entourent le piston de levage (16) en formant un U, un espace axial (55) est présent entre le piston de levage (16) et le chemin de retour (56) intérieur au moins dans l'une des deux positions de l'élément de retenue (12), et
le flux magnétique est guidé à travers les deux surfaces du piston de levage (16) et du chemin de retour (56) intérieur, qui forment l'espace axial (55).

2. Actionneur (1) selon la revendication 1, dans lequel les deux surfaces du piston de levage (16) et du chemin de retour (56) intérieur sont orientées l'une par rapport à l'autre de sorte que lorsque la bobine (14) est alimentée, le piston de levage (16) est déplacé dans la direction du chemin de retour (56) intérieur, de façon à réduire l'espace axial (56).

3. Actionneur (1) selon la revendication 2, dans lequel le piston de levage (16) et le chemin de retour (56) intérieur peuvent être mis en contact l'un avec l'autre.

4. Actionneur (1) selon la revendication 2 ou 3, dans lequel la normal (58) d'espace de l'espace axial (55) est inclinée par rapport à l'axe d'actionnement (6) ou est orientée de façon strictement axiale.

5. Actionneur (1) selon l'une des revendications précédentes, dans lequel l'aimant de levage (13) comprend en outre un second élément de stockage d'énergie (8), par lequel une force d'arrêt (47) antagoniste à la force magnétique (15) est maintenue sur le piston de levage (16), dans lequel la force magnétique (15) est de préférence une force de traction.

6. Actionneur (1) selon l'une des revendications 1 à 3, dans lequel la bobine (14) est reçue par le chemin de retour (56) intérieur, le chemin de retour (56) intérieur est agencé coaxialement à l'axe d'actionnement (6) et chevauche au moins partiellement axialement l'élément d'actionnement (5) et/ou un piston récepteur (42) entouré par le moyen d'entraînement axial (3).

7. Actionneur (1) selon la revendication 6, dans lequel le chemin de retour (57) extérieur est relié solidement au chemin de retour (56) intérieur par l'intermédiaire d'un ajustement serré.

8. Verrou de stationnement (2) pour un dispositif de verrou de stationnement (19) d'une boîte de vitesses (20), présentant au moins les composants suivants :
- un mécanisme de verrouillage (21) pour verrouiller une roue de verrouillage (22) dans un flux de couple (23), dans lequel lorsque le mécanisme de verrouillage (21) est utilisé, la roue de verrouillage (22) est bloquée dans un état de verrouillage et la roue de verrouillage (22) est libérée dans un état libre ; et
- un actionneur (1) selon l'une des revendications précédentes, dans lequel, dans la position déviée de l'élément d'actionnement (5), le mécanisme de verrouillage (21) est sorti de l'état de verrouillage, et dans lequel la position normale de l'élément d'actionnement (5) correspond à l'état de verrouillage du mécanisme de verrouillage (21).

9. Verrou de stationnement (2) selon la revendication 8, dans lequel un élément de déverrouillage (24) est en outre prévu, qui est mobile entre une position normale et une position de déverrouillage, dans lequel l'état libre du mécanisme de verrouillage (21) est maintenu dans la position de déverrouillage et la fonction de verrouillage normale du verrou de stationnement (2) est assurée dans la position normale.

10. Dispositif de verrou de stationnement (19), présentant
une roue de verrouillage (22) destinée à être agencée dans un flux de couple (23) pouvant être verrouillé et un verrou de stationnement (2) selon la revendication 8 ou la revendication 9, dans lequel la roue de verrouillage (22) peut être bloquée au moyen du mécanisme de verrouillage (21).

11. Boîte de vitesses (20) pour une chaîne cinématique (25), présentant au moins les composants suivants :
- un dispositif de verrou de stationnement (19) selon la revendication 10 ;
- une boîte de vitesses de transmission de couple (26) comprenant la roue de verrouillage (22) ; et
- un carter de boîte de vitesses (27) qui entoure un compartiment de boîte de vitesses (28), dans lequel le mécanisme de verrouillage (21) du verrou de stationnement (2), de préférence complètement, de manière particulièrement préférée, l'ensemble du dispositif de verrou de stationnement (19), est agencé dans le compartiment de boîte de vitesses (28).

12. Chaîne cinématique (25) présentant au moins les composants suivants :
- au moins une machine motrice (29) pour délivrer un couple ;
- au moins un consommateur (30, 31) pour recevoir un couple ; et
- une boîte de vitesses (20) selon la revendication 11,
dans laquelle l'au moins une machine motrice (29) et l'au moins un consommateur (30, 31) sont reliés l'un à l'autre de manière à transmettre le couple au moyen de la boîte de vitesses (20),
dans laquelle une transmission de couple entre la machine motrice (29) et le ou les consommateurs (30, 31) est inhibée, au moyen du
dispositif de verrouillage de stationnement (19), dans l'état de verrouillage du mécanisme de verrouillage (21).

13. Véhicule automobile (32), présentant
au moins une roue de propulsion (30, 31) et une chaîne cinématique (25) selon la revendication 12,
dans lequel, pour propulser le véhicule automobile (32), un couple peut être délivré depuis l'au moins une machine motrice (29) de la chaîne cinématique (25) à l'au moins une roue de propulsion (30, 31), et
un roulage du véhicule automobile (32) est empêché au moyen du dispositif de verrou de stationnement (19) dans l'état de verrouillage du mécanisme de verrouillage (21).
